# EUROPÄISCHE PATENTSCHRIFT

(11) **EP 0 732 247 B1**
(45) Veröffentlichungstag und Bekanntmachung des Hinweises auf die Patenterteilung: **08.11.2000**
(21) Anmeldenummer: 95119535.3
(22) Anmeldetag: 12.12.1995
(51) Int. Cl.: B61H 15/00

(54) **Scheibenbremse für Schienenfahrzeuge**
Disc brake for railway vehicles
Frein à disque pour véhicules ferroviaires

(30) Priorität: 16.03.1995 DE 19509540
(43) Veröffentlichungstag der Anmeldung: 18.09.1996
(73) Patentinhaber: KNORR-BREMSE Systeme für Schienenfahrzeuge GmbH, 80809 München (DE)
(72) Erfinder: Elstorpff, Marc, Dr., D-80637 München (DE); Staltmeir, Josef, D-80807 München (DE); Fuderer, Erich, D-82110 Germering (DE); Sponfeldner, Oskar, D-84453 Mühldorf a. Inn (DE)

(56) Entgegenhaltungen:
- EP-A- 0 121 815
- EP-A- 0 499 971
- GB-A- 2 153 461

## Beschreibung

Die Erfindung betrifft eine Scheibenbremse für insbesondere querverschiebliche Radsätze von Schienenfahrzeugen, mit einer Bremszange, deren beide Zangenhebel an ihren einen Enden mit Bremsbacken und andersendig bzw. in ihren mittleren Bereichen mit einem Bremskraftmotor bzw. einer sie verbindenden Stange gekoppelt sind, wobei zumindest die Längsachsen der Zangenhebel sich in einer Zangenebene befinden, zu welcher die Koppelstellen rechtwinklig verlaufende Drehachsen aufweisen, wobei die Stange einen deren Länge justierenden, vermittels eines Steuergestänges in Abhängigkeit vom Hub des Bremskraftmotors betätigbaren Verschleißnachsteller aufweist und wobei dem Steuergestänge eine sich im wesentlichen parallel zu den Zangenhebeln erstreckende Steuerstange zugehört, deren Enden um zumindest zu den Drehachsen annähernd parallel verlaufende Koppelachsen drehbar einerseits mittels eines Drehhebels an ein Kraftabgabeorgan des Bremskraftmotors und anderseits an einen Betätigungshebel des Verschleißnachstellers ankoppelbar sind.

Eine im wesentlichen diesen Merkmalen entsprechende Scheibenbremse ist mit der EP-A-0499971 bekannt geworden. Bei dieser Scheibenbremse weist das Steuergestänge im wesentlichen einen Drehhebel auf, bei welchem zur von Betätigungen des Verschleißnachstellers freien Aufnahme von Querverschiebungen des Radsatzes die Längen der Hebelarme in einem bestimmten Verhältnis zu den Längen von Hebelarmen an einem der Zangenhebel stehen. Das Steuergestänge dieser Scheibenbremse ist insbesondere hinsichtlich seiner vielen, am Steuergestänge erforderlichen, außenliegenden und damit gesondert abzudichtenden Gelenk- bzw. Lagerungsstellen relativ aufwendig.

Die nicht veröffentlichte EP.Anmeldung EP-A-0699846 beinhaltet eine Scheibenbremse der eingangs genannten Art, bei welcher die Steuerstange des Steuergestänges sich schräg zwischen den beiden Zangenhebeln erstreckt, insbesondere ihre endseitigen, drehgelenkartigen Ankoppelungen an das Kraftabgabeorgan bzw. den Betätigungshebel des Verschieißnachstellers befinden sich zwischen den beiden Zangenhebeln.

Im weiteren weist die Scheibenbremse nach der EP-A-0699846 als raumfestes Teil ein Bremsengehäuse auf, in welchem als Bremskraftmotor ein Bremszylinder gehaltert ist. Die ein Kraftabgabeorgan darstellende Kolbenstange des Bremszylinders ist an einem Drehhebel angelenkt, der über ein Exzentergetriebe mit einem Zangenhebel gekoppelt ist. Das genauer in der EP-A-0699846 beschriebene Exzentergetriebe weist eine im Bremsengehäuse drehbar gelagerte, den Drehhebel tragende Welle auf, an welcher mittels Exzenterzapfen einer der Zangenhebel in seinem mittleren Bereich gelagert ist. Der andere Zangenhebel ist in seinem mittleren Bereich am Bremsengehäuse gelagert. Endseitig sind die beiden Zangenhebel durch eine schwimmende, d.h. relativ zum Bremsengehäuse räumlich bewegliche Stange mit integriertem Verschleißnachsteller in Schraubgetriebebauart miteinander verbunden.

Die vorstehend erwähnten Scheibenbremsen sind als Bremszangeneinheiten ausgebildet, sie zeigen, daß hierbei durch eine räumlich getrennte Anordnung von Bremskrafterzeuger und Verschleißnachsteller raumsparende, kompakte Bauformen möglich sind.

Es ist Aufgabe der Erfindung, eine Scheibenbremse der eingangs genannten Art einfach und kosten- sowie wartungsgünstig derart auszubilden, daß Seitenverschiebungen des Radsatzes keine oder höchstens vernachlässigbar kleine Auswirkungen auf den Verschleißnachsteller haben, insbesondere keine unerwünschten Nachstellvorgänge bewirken. Dabei soll selbstverständlich auch eine kompakte Bauform in Art einer Bremszangeneinheit möglich sein.

Diese Aufgabe wird nach der Erfindung dadurch gelöst, daß die Koppelstellen an den Enden der Steuerstange sich zumindest annähernd auf den Drehachsen befinden, die den Koppelstellen eines der Zangenhebel zur Stange bzw. zum Bremskraftmotor zugehören.

In den Unteransprüchen sind für eine derartige Scheibenbremse nach der weiteren Erfindung vorteilhafte Ausbildungsmöglichkeiten aufgezeigt.

In der Zeichnung ist ein bevorzugtes Ausführungsbeispiel für eine nach der Erfindung ausgestaltete Scheibenbremse zum Teil schematisch dargestellt, und zwar zeigt
- Fig.1: eine teilweise aufgeschnittene Seitenansicht,
- Fig.2: eine ebenfalls teilweise aufgeschnittenen Aufsicht,
- Fig.3: die Stange mit integriertem Verschleißnachsteller im Axialschnitt,
- Fig.4: eine der Fig.2 entsprechende Aufsicht bei seitenverschobenem Radsatz und
- Fig.5: eine Einzelheit in vergrößertem Maßstab.

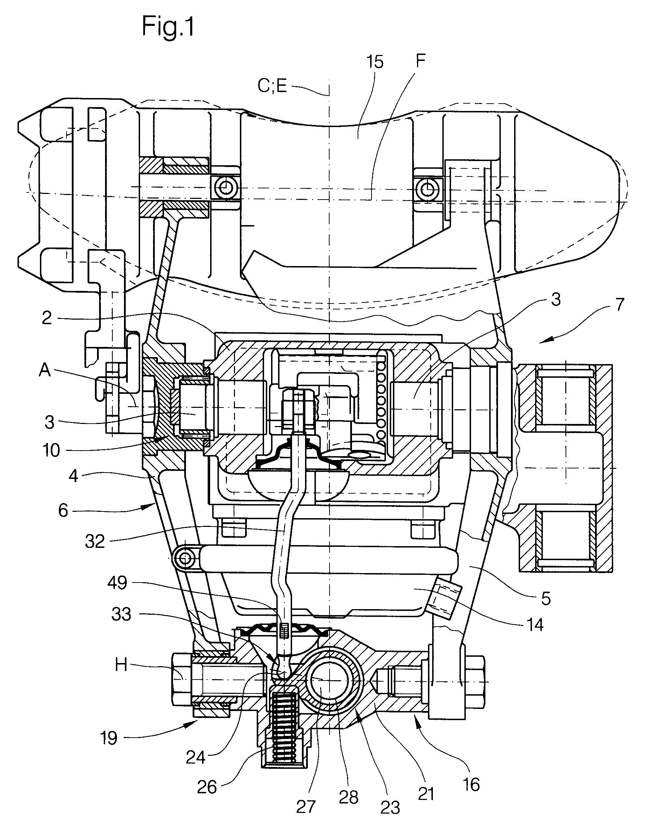

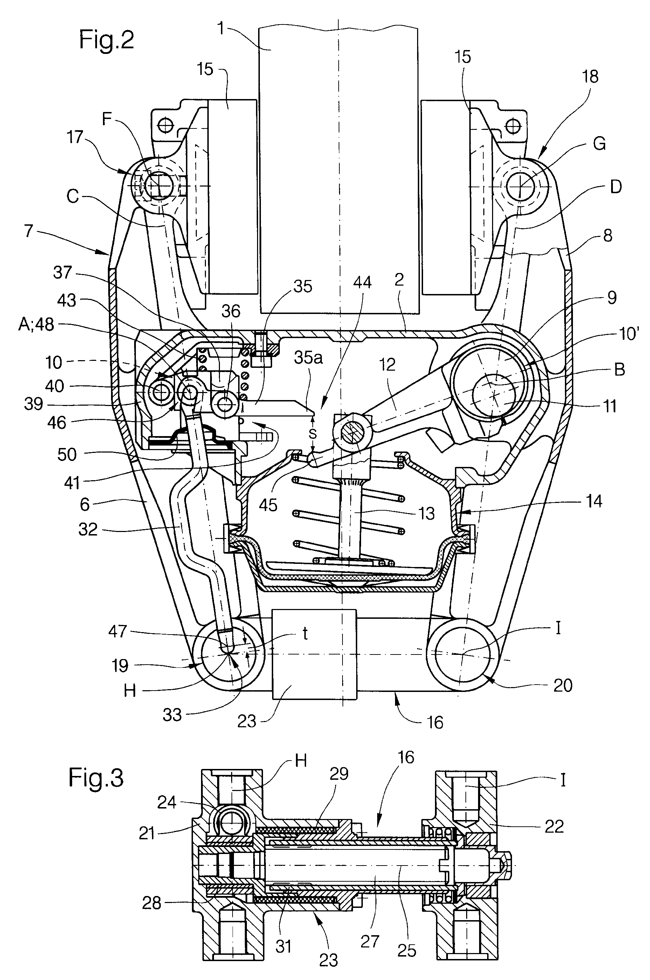

Die Fig.1 und 2 zeigen eine in Art einer Scheibenbremseinheit ausgebildete Scheibenbremse, welche mit einer nur teilweise dargestellten Bremscheibe 1 eines im weiteren nicht dargestellten Radsatzes eines Schienenfahrzeuges zusammenwirkt. In Fig.2 ist die Bremsscheibe 1 eine Achsbremsscheibe, selbstverständlich kann die Scheibembremse auch mit üblichen Radbremsscheiben zusammenwirken. An einem Bremsengehäuse 2 sind in einer als raumfest gehalten anzusehenden Koppelstelle 10 vermittels Bolzen 3 die beiden Wangen 4 und 5 eines doppelwangigen Zangenhebels 6 einer Bremszange 7 um eine Drehachse A drehbar angekoppelt. Der andersseitige Zangenhebel 8 ist in einer Koppelstelle 10' mittels eines Bolzens 9 am Bremsengehäuse 2 drehbar angekoppelt, der Bolzen 9 ist dabei um eine zur Drehachse A parallele, in Fig.2 in Aufsicht sichtbare Drehachse B drehbar am Bremsengehäuse 2 gelagert und trägt exzentrisch achsparallele Bolzenfortsätze 11, auf welchen der Zangenhebel 8 gelagert ist. Die Längsachsen C und D der Zangenhebel 6 und 8 befinden sich in einer Zangenebene E, die rechtwinklig zur Zeichenebene der Fig.1 verläuft. Die Drehachsen A und B verlaufen rechtwinklig zur Zangenebene E.

Vom Bolzen 9 kragt ein Dreharm 12 aus, an dessen Ende die Kolbenstange eines Bremszylinders als Kraftabgabeorgan 13 eines Bremskraftmotors 14 angelenkt ist. Die beiden Zangenhebel 6 und 8 sind an ihren einen Enden mit an die Bremsscheibe 1 anpreßbaren Bremsbacken 15 und an ihren anderen Enden mit einer sie verbindenden Stange 16, im Ausführungsbeispiel eine Druckstange, um zu den Drehachsen A und B parallele Drehachsen F, G, H und I drehbar in Koppelstellen 17, 18, 19 und 20 gekoppelt. Die Stange 16 ist zu ihrer Ankopplung mit sich jeweils zwischen den beiden Wangen 4 und 5 der Zangenhebel 6 und 8 erstreckenden Lagerteilen 21 und 22 (Fig.3) versehen.

Beim Druckmittelbeaufschlagen des Bremskraftmotors 14 dreht dessen Kraftabgabeorgan 13 den Drehhebel 12, wodurch infolge der exzentrischen Anordnung der Bolzenfortsätze 11 der Zangenhebel 8 um seine Koppelstelle 20 zur Stange 16 in Andrückrichtung seiner Bremsbacke 15 an die Bremsscheibe 1 gedreht wird. Der Aufbau und die Funktionsweise der Exzenter-Zuspannung der Bremszange 7 entspricht damit derjenigen nach der bereits erwähnten EP-A-0699846. Nach Anlegen der dem Zangenhebel 8 zugeordnete Bremsbacke 15 an die Bremsscheibe 1 dreht sich der Zangenhebel 8 um seine Koppelstelle 18 zu dieser Bremsbacke 15, wobei über die Koppelstelle 20, die Stange 16 und die Koppelstelle 19 der Zangenhebel 6 um die Koppelstelle 10 zum Anlegen seiner Bremsbacke 15 an die Bremsscheibe 1 gedreht wird.

Die Stange 16 ist mit einem in sie integrierten Verschleißnachsteller 23 ausgestattet, welcher entsprechend dem Verschleiß der Bremsbacken 15 die Länge der Stange 16 vergrößert. Der Verschleißnachsteller 23 weist, wie insbesondere den Fig. 1 und 3 entnehmbar ist, einen Betätigungshebel 24 auf, der am dem Zangenhebel 6 zugeordneten Lagerteil 21 um eine die Drehachse H rechtwinklig schneidende Längsachse 25 der Stange 16 drehbar gelagert ist. Der Drehhebel 24 ist vermittels einer sich gegen das Lagerteil 21 abstützenden Feder 26 in seiner Ruhestellung gegen einen nicht dargestellten Anschlag angedrückt gehalten, wobei er sich mit zumindest angenähert in der Drehachse H verlaufender Längsrichtung erstreckt. Eine gleichachsig zur Längsachse 25 drehbar und axial unverschieblich am Lagerteil 21 gehaltene, sich in Richtung zum Lagerteil 22 erstreckende Gewindespindel 27 ist über je eine mit einer Wickelfeder ausgestattete Einwegdrehkupplung 28 bzw. 29 mit dem Betätigungshebel 24 und dem um die Längsachse 25 drehfest gehaltenen Lagerteil 21 gekoppelt. Eine mit der Gewindespindel 27 verschraubte Stellmutter 31 ist am dem Zangenhebel 8 zugeordneten Lagerteil 22 gehaltert. Der Prinzipaufbau und die Funktionsweise derartiger Verschleißnachsteller mit zwei Einwegdrehkupplungen ist allgemein bekannt und braucht daher nicht in allen Einzelheiten beschrieben zu werden, der hier verwendete, spezielle Verschleißnachsteller 23 entspricht im wesentlichen demjenigen nach der bereits erwähnten EP-A-0699846 Stattdessen können jedoch auch andere Bauarten von Verschleißnachstellern verwendet werden, wesentlich ist lediglich, daß er einen dem Betätigungshebel 24 entsprechenden Hebel aufweist: Beispielsweise kann er ähnlich dem aus der ebenfalls bereits erwähnten EP-A-0499971 bekannten Verschleißnachsteller, umgestaltet auf Verlängerungswirkung für die Stange, ausgestaltet sein.

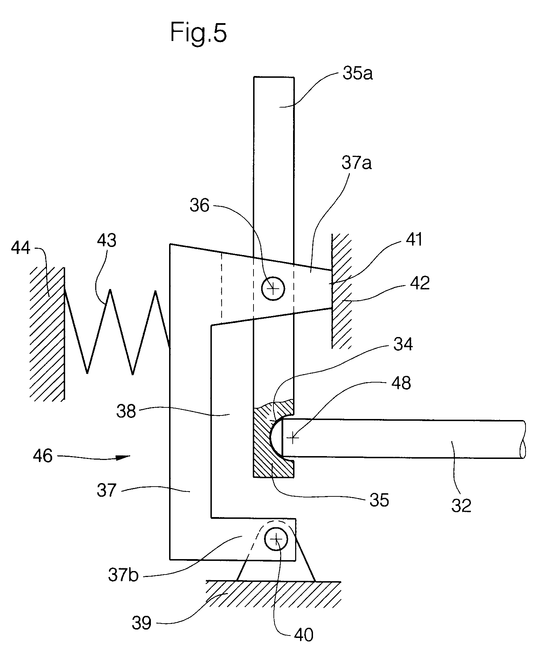

Zwischen den beiden Wangen 4 und 5 des Zangenhebels 6 verläuft eine Steuerstange 32, deren gerundetes, rückwärtiges Ende in einer Lagerpfanne am freien Ende des Betätigungshebels 24 anliegt: Die Steuerstange 32 ist somit über eine Koppelstelle 33 mit dem Betätigungshebel 24 gekoppelt; in Fig.2 ist der Betätigungshebel 24 nicht eingezeichnet. In ihren Endbereichen verläuft die Steuerstange 32 im wesentlichen in einer die Längsachse C beinhalteden, zur Zangenebene rechtwinkligen Ebene etwa parallel zur Längsachse C, in ihrem mittleren Bereich ist sie zum Vermeiden von Kollisionen mit anderen Bauteilen, insbesondere dem Bremskraftmotor 14, zur Bremszangenaußenseite hin ausgekröpft. Das vordere, ebenfalls gerundete Ende der Steuerstange 32 liegt in einer Lagerpfanne 34 eines Drehhebels 35 auf, wie es besonders deutlich aus der schematischen Fig.5, aber auch aus der Fig.2 ersichtlich ist. Der zweiarmige Drehhebel 35 ist in seinem mittleren Bereich in einer Anlenkstelle 36 an einem Überhubhebel 37 drehbar gelagert. Der Überhubhebel 37 ist U-artig ausgebildet, so daß er zwischen seinen beiden Schenkeln 37a und 37b eine Ausnehmung 38 aufweist; die Lagerpfanne 34, d.h. die Auflagestelle der Steuerstange 32 auf dem Drehebel 35, befindet sich im Bereich der Ausnehmung 38. Der Überhubhebel 37 verläuft steuerstangenabgewandt etwa parallel zum Drehhebel 35 und überragt das steuerstangenseitige Ende des Drehhebels 35, er ist an diesem seinem Ende mit seinem Schenkel 37b drehbar an einem in Fig.5 nur in seinen hier wesentlichen Abschnitten angedeuteten Gehäuse 39 in einer Lagerstelle 40 angelenkt. Das Gehäuse 39 ist raumfest gehalten, es ist vorzugsweise am Bremsengehäuse 2 gehaltert oder mit diesem einstückig. Der andere Schenkel 37a weist die Anlenkstelle 36 auf und bildet mit seinem Ende einen Anschlag 41 zu einem raumfest gehaltenen Anschlagteil 42, das dem Gehäuse 39 zugehören kann. Eine gegenüberliegend zum Anschlag 41 am Überhubhebel 37 angreifende Feder 43 belastet den Überhubhebel 37 in Schließrichtung des Anschlages 41, die Feder 43 ist gegen ein vorzugsweise dem Gehäuse 39 zugehörendes Teil 44 abgestützt. Aus Fig.2 ist ein Schutzbalg 50 aus elastischem Material ersichtlich, welcher sich zwischen dem Gehäuse 39 und der Steuerstange 32 an deren aus dem Gehäuse 39 austretendem Bereich erstreckt und den Innenraum des Gehäuses 39 vor Verschmutzung schützt.

Das freie Ende 35a des Drehhebels 35 steht zur Bildung einer Tothubeinrichtung 44, wie aus Fig.2 ersichtlich, bremsscheibenseitig mit einem Abstand s einem Hebelteil 45 gegenüber; das Hebelteil 45 ist als eine Verlängerung des Dreharmes 12 ausgebildet. Der Abstand s entspricht dem Weg, den, ausgehend von mit korrektem Lösehub gelöster Scheibenbremse, das Ende des Hebelteiles 45 beim noch zuspannungskraftfreien Anlegen der beiden Bremsbacken 15 an die Bremsscheibe 1 zurücklegt; beim Bremsenanlegen schlägt das Hebelteil 45 gerade an das Ende 35a des Drehhebels 35 an. Bei einem Bremsen-Anlegevorgang, ausgehend von einem z.B. durch Bremsbackenverschleiß zu großen Lösehub der Scheibenbremse, nimmt ab Beginn eines Überwindens des Löse-Überhubes das Hebelteil 45 bei seiner weiteren Bewegung bis zum Erreichen des Anlegens der Bremse das Ende 35a unter Drehen des Drehhebels 35 mit, wobei die Steuerstange 32 in Richtung zum Betätigungshebel 24 verschoben wird und hierbei den Verschleißnachsteller 23 betätigt. Das bremsscheibenseitige, vordere Ende der Steuerstange 32 ist somit über eine den Drehhebel 35 und den Überhubhebel 37 mitumfassende Koppelstelle 46 an das Kraftabgabeorgan 13 des Bremskraftmotors 14 ankoppelbar.

In die Steuerstange 32 ist ein in Druckrichtung abgefangenes, elastisches Vorspannelement 49 integriert, weiches die Steuerstange 32 teleskopisch zu verlängern sucht: dieses Vorspannelement 49 hält auch bei relativ großen Fertigungsmaßabweichungen die Steuerstange 32 stets in klapperfreier und verschleißmindernder Anlage in den Koppelstellen 33 und 46 am Betätigungshebel 24 bzw. der Lagerpfanne 34. Die Vorspannung des Vorspannelementes 49 ist kleiner als die zum Betätigen des Verschleißnachstellers 23 am Betätigungshebel 24 erforderliche Kraft. Die Feder 43 belastet dagegen den Anschlag 41 mit einer Schließkraft, welche größer ist als die erwähnte Kraft bei weitgehend von Druckspannungen freier Stange 16. Durch diese Federabstimmung wird erreicht, daß währen Festbremsvorgängen, d.h. beim einem Bremsenanlegen nachfolgenden, festen Zuspannen der Scheibenbremse, infolge der dabei auftretenden Schwergängigkeit des Verschleißnachstellers 23, dessen Betätigungshebel 24 die Steuerstange 32 festhält, so daß bei weiterem Drehen des Drehhebels 35 durch den sich weiterbewegenden Hebelteil 45 über die Anlenkstelle 36 der Anschlag 41 unter Drehen des Überhubhebels 37 um dessen Lagerstelle 40 ausgehoben wird. Die Schwergängigkeit des Verschleißnachstellers 23 ist durch den bei dessen zuspannungkraftproportionaler Druckbelastung auftrenden Bewegungs- und Reibungswiderstand zwischen der Gewindespindel 27 und der Stellmutter 31 bedingt.

Die beiden Koppelstellen 33 und 46 der Steuerstange 32 weisen Koppelachsen 47 bzw 48 auf, die zumindest annähernd parallel zu den benachbarten Drehachsen H bzw. A verlaufen; die Koppelachse 48 der Koppelstelle 46 ist vorzugsweise gleichachsig zur Achse der Lagerpfanne 34. Die Koppelstellen 33 und 46 können noch weitere Drehfreiheitsgrade für die Steuerstange 32 aufweisen.

Für die Erfindung ist wesentlich, daß die Koppelstellen 33 und 46 und insbesondere deren Koppelachsen 47 bzw. 48 sich zumindest nahe der jeweils benachbarten Drehachsen H bzw. A und zumindest nahezu die Längsachse C schneidend befinden. Besonders zweckmäßig ist es, wenn die Koppelachse 48 der Koppelstelle 46 gleichachsig zur Drehachse A und die Koppelachse 47 der Koppelstelle 33 mit einem Abstand t in Richtung zur Bremsscheibe 1 vor der Drehachse H verläuft, wobei der Abstand t etwa der Hälfte des mittleren Hubweges der Steuerstange 32 beim Betätigen des Verschleißnachstellers 23 entspricht. Beim Betätigen des Verschleißnachstellers 23 verschiebt sich die Koppelachse 47 etwa entlang der Längsachse C zur anderen, bremsscheibenabgewandten Seite der Drehachse H bis etwa wiederum zum Abstand t, sie befindet sich somit in jedem Löse- oder Betätigungszustand der Scheibenbremse nahe oder gleichachsig zur Drehachse H.

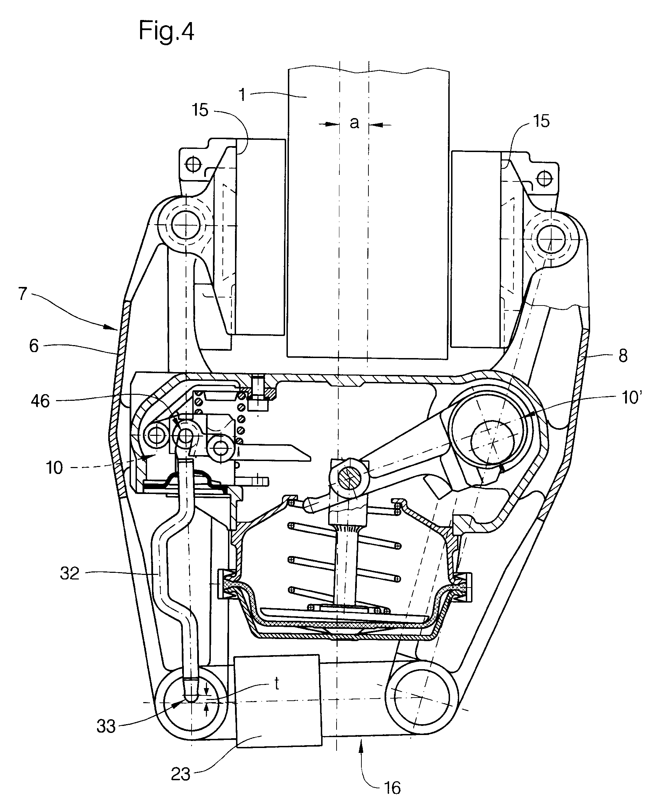

Die zumindest nahe der Drehachsen A und H befindliche Lage der Koppelstellen 33 und 46 bzw. deren Koppelachsen 47 und 48 gewährleistet, daß bei Seitenversetzungen der Bremsscheibe 1, wie sie bei querverschieblichen Radsätzen von Schienenfahrzeugen vorgesehen sind, keine Betätigung des Verschleißnachstellers 23 erfolgt. In Fig.4 ist die Bremsscheibe 1 gegenüber der Bremszange 7 um das Maß a zur Seite versetzt dargestellt, die Zangenhebel 6 und 8 verlaufen dementsprechend um ihre Koppelstellen 10 bzw 10' bzw. deren Drehachsen A und B gedreht derart, daß die Bremsbacken 15 ihre Relativlagen zur Bremsscheibe 1 im wesentlichen unverändert beibehalten. Die Stange 16 mit dem Verschleißnachsteller 23 verläuft, bezogen auf Fig.2, zur der Versetzung der Bremsscheibe 1 entgegengesetzten Seite versetzt und in der Zangenebene E etwas gedreht. Die Steuerstange 32 befindet sich in einer zum Zangenhebel 6 unveränderten Relativlage, beim Seitenversetzen der Bremsscheibe 1 kann sie somit, unabhängig vom Löse- oder Betätigungszustand der Scheibenbremse, keinen Betätigungshub auf den Betätigungshebel 24 des Verschleißnachstellers 23 ausüben.

In Abänderung zum beschriebenen Ausführungsbeispiel können an der Bremszange die Zangenhebel in ihren mittleren Bereichen an einer Stange, in diesem Falle Zugstange, mit integriertem, durch einen Betätigungshebel betätigbaren, in Verkürzungsrichtung der Stange wirkenden Verschleißnachsteller und in ihren Endbereichen an einem Bremskraftmotor angelenkt sein. Der Verschleißnachsteller kann beliebiger Bauart sein, er muß lediglich - wie bereits erwähnt - einen Betätigungshebel aufweisen. Die Halterung der Bremszange an einem raumfesten Teil, letztlich einem Fahrzeug- oder Drehgestellrahmen, kann an anderer Koppelstelle als der Koppelstelle 10 erfolgen, die Bauform einer Bremszangeneinheit kann evtl. mit dem Bremsengehäuse entfallen. Auch das Zuspannen der Bremszange kann andersartig, in einer der vielen, bekannten Arten, erfolgen, beispielsweise vermittels eines direkt oder über ein Hebelgetriebe mit den Zangenhebeln gekoppelten Bremszylinders.

| Aufstellung der Bezugszeichen. | | | |
|---|---|---|---|
| 1 | Bremsscheibe | 2 | Bremsengehäuse |
| 3 | Bolzen | 4 | Wange |
| 5 | Wange | 6 | Zangenhebel |
| 7 | Bremszange | 8 | Zangenhebel |
| 9 | Bolzen | 10 | Koppelstelle |
| 10' | Koppelstelle | 11 | Bolzenfortsatz |
| 12 | Dreharm | 13 | Kraftabgabeorgan |
| 14 | Bremskraftmotor | 15 | Bremsbacke |
| 16 | Stange | 17 | Koppelstelle |
| 18 | Koppelstelle | 19 | Koppelstelle |
| 20 | Koppelstelle | 21 | Lagerteil |
| 22 | Lagerteil | 23 | Verschleißnachsteller |
| 24 | Betätigungshebel | 25 | Längsachse |
| 26 | Feder | 27 | Gewindespindel |
| 28 | Einwegdrehkupplung | 29 | Einwegdrehkupplung |
| 30 | Gehäuseteil | 31 | Stellmutter |
| 32 | Steuerstange | 33 | Koppelstelle |
| 34 | Lagerpfanne | 35 | Drehhebel |
| 35a | Ende | 36 | Anlenkstelle |
| 37 | Überhubhebel | 37a | Schenkel |
| 37b | Schenkel | 38 | Ausnehmung |
| 39 | Gehäuse | 40 | Lagerstelle |
| 41 | Anschlag | 42 | Anschlagteil |
| 43 | Feder | 44 | Tothubeinrichtung |
| 45 | Hebelteil | 46 | Koppelstelle |
| 47 | Koppelachse | 48 | Koppelachse |
| 49 | Vorspannelement | 50 | Schutzbalg |
| A | Drehachse | B | Drehachse |
| C | Längsachse | D | Längsachse |
| E | Zangenebene | F | Drehachse |
| G | Drehachse | H | Drehachse |
| I | Drehachse | | |
| a | Maß | s | Abstand |
| t | Abstand | | |

## Patentansprüche

1. Scheibenbremse für insbesondere querverschiebliche Radsätze von Schienenfahrzeugen, mit einer Bremszange (7), deren beide Zangenhebel (6;8) an ihren einen Enden mit Bremsbacken (15) und andersendig bzw. in ihren mittleren Bereichen mit einem Bremskraftmotor (14) bzw. einer sie verbindenden Stange (16) gekoppelt sind, wobei zumindest die Längsachsen (C;D) der Zangenhebel (6;8) sich in einer Zangenebene (E) befinden, zu welcher die Koppelstellen (17;18;19;20) rechtwinklig verlaufende Drehachsen (A;B;F;G;H;I) aufweisen, wobei die Stange (16) einen deren Länge justierenden, vermittels eines Steuergestänges in Abhängigkeit vom Hub des Bremskraftmotors (14) betätigbaren Verschleißnachsteller (23) aufweist und wobei dem Steuergestänge eine sich im wesentlichen parallel zu den Zangenhebeln (6;8) erstreckende Steuerstange (32) zugehört, deren Enden um zumindest zu den Drehachsen (A;B;F;G;H;I) annähernd parallel verlaufende Koppelachsen (47;48) drehbar einerseits indirekt mittels eines Drehhebels (35) an ein Kraftabgabeorgan (13) des Bremskraftmotors (14) und anderseits an einen Betätigungshebel (24) des Verschleißnachstellers (23) ankoppelbar sind,
dadurch gekennzeichnet,
daß die Koppelstellen (33;46) an den Enden der Steuerstange (32) sich zumindest annähernd auf den Drehachsen (A;H) befinden, die den Koppelstellen (10;19) eines der Zangenhebel (6) zur Stange (16) bzw. zum Bremskraftmotor (14) zugehören.

2. Scheibenbremse nach Anspruch 1, dadurch gekennzeichnet, daß sich zumindest eine der Koppelstellen (33;46) der Steuerstange (32), in deren Bewegungsrichtung zum Betätigen des Verschleißnachstellers (23) gesehen, in einem Abstand (t), der etwa dem halben, mittleren Hubweg der Steuerstange (32) beim Betätigen des Verschleißnachstellers (23) entspricht, vor der dieser Koppelstelle (33) zugeordneten Drehachse (H) befindet.

3. Scheibenbremse nach Anspruch 1 oder 2, dadurch gekennzeichnet, daß sich die Koppelachsen (47;48) der Koppelstellen (33;46) der Steuerstange (32) zumindest annähernd auf bzw. im Abstand (t) vor der jeweiligen Drehachse (A;H) befinden.

4. Scheibenbremse nach Anspruch 2 oder 3, dadurch gekennzeichnet, daß die bremskraftmotorseitige Koppelstelle (46) der Steuerstange (32) bzw. deren Koppelachse (48) sich zumindest annähernd auf und die verschleißnachstellerseitige Koppelstelle (33) bzw. deren Koppelachse (447) in Abstand (t) vor der jeweils zugeordneten Drehachse (A bzw.H) befindet.

5. Scheibenbremse nach Anspruch 4, wobei die Bremszange (7) eine raumfeste, insbesondere an einem Bremsengehäuse (2) gehaltene Koppelstelle (10) aufweist, dadurch gekennzeichnet, daß die bremskraftmotorseitige Koppelstelle (46) der Steuerstange (32) bzw. deren Koppelachse (48) sich zumindest annähernd auf der Drehachse (A) dieser raumfesten Koppelstelle (10) der Bremszange (7) befindet.

6. Scheibenbremse nach einem oder mehreren der vorstehenden Ansprüche 1 bis 5, dadurch gekennzeichnet, daß zumindest eine der Koppelstellen (46) der Steuerstange (32) einen den Hub des Bremskraftabgabeorgans (13) beim verschleißnachstellungsfreien Bremsenanlegen aufnehmende Tothubeinrichtung (44) aufweist.

7. Scheibenbremse nach Anspruch 6, dadurch gekennzeichnet, daß die bremskraftmotorseitige Koppelstelle (46) der Steuerstange (32) einen im wesentlichen seitlich von der Steuerstange (32) auskragenden Drehhebel (35) aufweist, dessen eines Ende eine Lagerstelle zur Steuerstange (32) aufweist, dessen anderes Ende (35a) einem vom Bremskraftmotor (14) bewegbaren Hebelteil (45) mit einem Abstand (s), der dem Hubweg dieses Hebelteils (45) beim verschleißnachstellungsfreien Bremsenzuspannen entspricht, gegenübersteht und der in seinem mittlerer Abschnitt an einem Überhubhebel (37) angelenkt ist, wobei der Überhubhebel (37) nahe der Anlenkstelle (36) einen von einer Feder (43) in Schließrichtung belasteten Anschlag (41) zu einem raumfest gehaltenen Teil (42) aufweist und andersendig drehbar gelagert ist, wobei die Federbelastung des Anschlages (41) höher als die Betätigungskraft des Verschleißnachstellers (23) ist.

8. Scheibenbremse nach Anspruch 7, dadurch gekennzeichnet, daß der Drehhebel (35) und der Überhubhebel (37) etwa parallel zueinander und rechtwinklig zur Steuerstange (32) verlaufen, wobei der Überhubhebel (37) mittig eine Ausnehmung (38) aufweist, in welcher sich die Lagerstelle der Steuerstange (32) zum Drehhebel (35) befindet.

9. Scheibenbremse nach Anspruch 7 oder 8, dadurch gekennzeichnet, daß die Tothubeinrichtung (44) in einem ortsfest, insbesondere an einem Bremsengehäuse (2) gehalterten Gehäuse (39) angeordnet ist, aus welchem die Steuerstange (32) vermittels eines Schutzbalges (50) abgedichtet herausragt.

10. Scheibenbremse nach Anspruch 7, 8 oder 9, dadurch gekennzeichnet, daß in die Steuerstange (32) ein elastisches Vorspannelement (49) integriert ist, dessen Vorspannung kleiner als die zum Betätigeng des Verschleißnachstellers (23) erforderliche Kraft ist.

11. Scheibenbremse nach einem oder mehreren der vorstehenden Ansprüche 1 bis 10, wobei die Zangenhebel (6;8) der Bremszange (7) doppelwangig ausgebildet sind, dadurch gekennzeichnet, daß die Steuerstange (32) zumindest im wesentlichen zwischen den beiden Wangen (4;5) eines Zangenhebels (6) verläuft.

12. Scheibenbremse nach Anspruch 11, dadurch gekennzeichnet, daß die Steuerstange (32) in ihren Endbereichen zumindest annähernd in einer zur Zangenebene (E) rechtwinkligen, die Längsachse (C) des einen Zangenhebels (6) beinhaltenden Ebene verläuft und in ihrem mittleren Bereich eine seitliche Auskröpfung aufweist.

## Claims

1. Disc brake for sets of wheels for rail vehicles, especially transversely-movable ones, having a brake fork (7), the two forked levers (6; 8) of which are coupled at one of their ends to brake shoes (15), and on the other end, and/or in their middle regions, to a brake force motor (14) and/or a rod (16) connecting them, wherein at least the longitudinal axes (C;D) of the forked levers (6; 8) are located in a fork plane (E), to which the coupling points (17;18;19;20) have axes of rotation (A;B;F;G;H;I) extending at right angles, wherein the rod (16) has a wear-adjuster (23) which adjusts its length and is actuatable by means of a control mechanism in dependence on the stroke of the brake force motor (14), and wherein a control rod (32), extending substantially parallel to the forked levers (6; 8), is associated with the control mechanism, the control rod ends being rotatably couplable about coupling axes (47; 48) extending at least approximately parallel to the axes of rotation (A;B;F;G;H;I), on the one hand indirectly by means of a rotary lever (35) to a power output unit (13) of the brake force motor (14), and on the other hand to an actuation lever (24) of the wear-adjuster (23),
characterised in that
the coupling points (33;46) at the ends of the control rod (32) are located at least approximately on the axes of rotation (A;H) which belong to the coupling points (10; 19) of one of the forked levers (6) with the rod (16) and/or the brake force motor (14).

2. Disc brake according to claim 1, characterised in that at least one of the coupling points (33; 46) of the control rod (32), seen in their direction of movement for actuating the wear-adjuster (23), is located at a distance (t), which corresponds approximately to half the middle of the stroke path of the control rod (32) during actuation of the wear-adjuster (23), in front of the axis of rotation (H) associated with this coupling point (33).

3. Disc brake according to claim 1 or 2, characterised in that the coupling axes (47; 48) of the coupling points (33; 46) of the control rod (32) are located at least approximately on, or at a distance (t) in front of, the respective axis of rotation (A;H).

4. Disc brake according to claim 2 or 3, characterised in that the coupling point (46) of the control rod (32) or its coupling axis (48), on the brake force motor side, is located at least approximately on the respectively associated axis of rotation (A or H), and the coupling point (33) or its coupling axis (447), on the wear-adjuster side, is located at a distance (t) in front of the respectively associated axis of rotation (A or H).

5. Disc brake according to claim 4, wherein the brake rod (7) has a fixed coupling point (10) held in particular on a brake housing (2), characterised in that the coupling point (46) of the control rod (32) or its coupling axis (48), on the brake force motor side, is located at least approximately on the axis of rotation (A) of this fixed coupling point (10) of the brake rod (7).

6. Disc brake according to one or more of the preceding claims 1 to 5, characterised in that at least one of the coupling points (46) of the control rod (32) has a dead stroke device (44) receiving the stroke of the brake force output unit (13) when brakes with no wear-adjustment are applied.

7. Disc brake according to claim 6, characterised in that the coupling point (46) of the control rod (32) on the brake force motor side has a rotary lever (35) protruding substantially laterally from the control rod (32), its one end having a bearing point for the control rod (32), its other end (35a) located opposite a lever portion (45) movable by the brake force motor (14), with a distance (s) which corresponds to the stroke path of this lever part (45) when brakes with no wear adjustment are applied, and which is articulated in its middle section on an over-stroke lever (37), the over-stroke lever (37) near the articulation point (36) having a stop (41) loaded by a spring (43) in the closure direction, against a part (42) which is held fixedly, and on the other end being rotatably mounted, the spring loading of the stop (41) being greater than the actuation force of the wear-adjuster (23).

8. Disc brake according to claim 7, characterised in that the rotary lever (35) and the over-stroke lever (37) extend approximately parallel to each other and at right angles to the control rod (32), the over-stroke lever (37) having a recess (38) in the middle in which is located the bearing point of the control rod (32) for the rotary lever (35).

9. Disc brake according to claim 7 or 8, characterised in that the dead stroke device (44) is arranged in a housing (39), fixedly held in particular on a brake housing (2), from which the control rod (32) protrudes, sealed by means of a protective bellows (50).

10. Disc brake according to claim 7, 8 or 9, characterised in that an elastic pre-stressing element (49) is integrated into the control rod (32), its pre-stress being less than the force necessary for actuating the wear-adjuster (23).

11. Disc brake according to one or more of the preceding claims 1 to 10, wherein the forked lever (6;8) of the brake rod (7) is of twin-fork construction, characterised in that the control rod (32) extends at least substantially between the two legs (4;5) of a forked lever (5).

12. Disc brake according to claim 11, characterised in that the end regions of the control rod (32) extend at least approximately in a plane which is at right angles to the rod plane (E) and which contains the longitudinal axis (C) of one rod lever (6), and have a lateral bulge in their middle region.

## Revendications

1. Frein à disque pour trains de roues, notamment mobiles transversalement, de véhicules sur rails, comportant une pince de frein (7), dont les deux leviers (6;8) sont accouplés, au niveau de premières extrémités, à des mâchoires de frein (15) et, au niveau de leurs autres extrémités ou dans leurs zones médianes, respectivement à un moteur (14) produisant une force de freinage et à une tige (16) qui les relie, frein dans lequel au moins les axes longitudinaux (C;D) des leviers (6;8) de la pince sont situés dans un plan (E) de la pince, perpendiculairement auquel les points d'accouplement (17;18;19;20) présentent des axes de rotation (A;B;F;G;H;I), et la tige (16) possède un dispositif de compensation d'usure (23), qui ajuste la longueur de la tige et peut être actionné à l'aide d'une tringlerie de commande en fonction de la course du moteur (14) produisant la force de freinage, et dans lequel fait partie de la tringlerie de commande une tige de commande (32), qui s'étend essentiellement parallèlement aux leviers (6;8) de la pince et dont les extrémités peuvent être accouplées, de manière à pouvoir tourner autour d'axes d'accouplement (47;48) qui sont au moins approximativement parallèles aux axes de rotation (A;B;F;G;H;I), d'une part, indirectement au moyen d'un levier rotatif (35), à un organe (13) de délivrance de force du moteur (14) produisant la force de freinage et, d'autre part, à un levier d'actionnement (24) du dispositif de compensation d'usure (23),
caractérisé en ce
que les points d'accouplement (33;46) aux extrémités de la tige de commande (32) sont situés, au moins approximativement sur les axes de rotation (A;H) qui font partie des points d'accouplement (10;19) de l'un des leviers (6) de la pince à la tige (16) ou au moteur (14) produisant la force de freinage.

2. Frein à disque selon la revendication 1, caractérisé on ce qu'au moins l'un des points d'accouplement (33;46) de la tige de commande (32) est situé, lorsqu'on regarde dans sa direction de déplacement pour l'actionnement du dispositif de compensation d'usure (23), à une distance (t), qui correspond approximativement à la moitié de la course de déplacement moyenne de la tige de commande (32) lors de l'actionnement du dispositif de compensation d'usure (23), en avant de l'axe de rotation (H) associé à ce point d'accouplement (33).

3. Frein à disque selon la revendication 1 ou 2, caractérisé en ce que les axes d'accouplement (47,48) des points d'accouplement (33;46) de la tige de commande (32) sont situés, pour l'un au moins, approximativement sur et, pour l'autre, à une distance (t) en avant de l'axe de rotation respectif (A;H).

4. Frein à disque selon la revendication 2 ou 3, caractérisé en ce que le point d'accouplement (46), situé du côté du moteur produisant la force de freinage, de la tige de commande (32) ou son axe d'accouplement (48) est situé au moins approximativement sur l'axe de rotation respectivement associé (A ou H) et que le point d'accouplement (33), situé du côté du dispositif de compensation d'usure, ou son axe d'accouplement (47) est situé à une distance (t) en avant de l'axe de rotation respectivement associé (A ou H).

5. Frein à disque selon la revendication 4, dans lequel la pince de frein (7) possède un point d'accouplement (10) fixe dans l'espace, notamment fixé sur un boîtier de frein (2), caractérisé en ce que le point d'accouplement (46), situé du côté du moteur produisant la force de freinage, de lui tige de commande (32) ou son axe d'accouplement (48) est situé au moins approximativement sur l'axe de rotation (A) de ce point d'accouplement (10), fixe dans l'espace, de la pince de frein (7).

6. Frein à disque selon une ou plusieurs des revendications précédentes 1 à 5, caractérisé en ce qu'au moins l'un des points d'accouplement (46) de la tige de commande (32) possède un dispositif à course à vide (44) qui absorbe la course de l'organe (13) de délivrance de la force de freinage dans le cas du serrage du frein sans compensation de l'usure.

7. Frein à disque selon la revendication 6, caractérisé en ce que le point d'accouplement (46), situé du côté du moteur produisant la force de freinage, de la tige de commande (32) possède un levier rotatif (35), qui fait saillie essentiellement latéralement par rapport à la tige de commande (32) et dont une extrémité comporte un point d'appui pour la tige de commande (32), et dont l'autre extrémité (35a) est située en vis-à-vis d'un élément de levier (45) déplaçable par le moteur (14) produisant la force de freinage, à une distance (s) qui correspond à la course de déplacement de cet élément de levier (45) dans le cas d'an serrage du frein sans compensation de l'usure, et qui est articulé, dans sa section médiane, sur un levier de dépassement de course (37), le levier de dépassement de course (37) possédant, à proximité du point d'articulation (36), une butée (41), chargée par un ressort (43) dans le sens de fermeture, par rapport à un élément (42) maintenu fixe dans l'espace, et étant, à l'autre extrémité, supporté de manière à pouvoir tourner, la charge de la butée (41) par le ressort étant supérieure à la force d'actionnement du dispositif de compensation d'usure (23).

8. Frein à disque selon la revendication 7, caractérisé en ce que le levier rotatif (35) et le levier de dépassement de course (37) sont approximativement parallèles entre eux et perpendiculaires à la tige de commande (32), le levier de dépassement de course (37) possédant en son centre un évidement (38), dans lequel est situé le point d'appui de la tige de commande (32) par rapport au levier rotatif (35).

9. Frein à disque selon la revendication 7 ou 8, caractérisé en ce que le dispositif à course à vide (44) est disposé dans un boîtier fixe (39), qui est fixé notamment sur un boîtier de frein (2) et duquel la tige de commande (32) ressort d'une manière étanche grâce à la présence d'un soufflet de protection (50).

10. Frein à disque selon la revendication 7, 8 ou 9, caractérise en ce que dans la tige de commande (32), est intégré un élément élastique de précontrainte (49), dont la précontrainte est inférieure à la force nécessaire pour l'actionnement du dispositif de compensation d'usure (23).

11. Frein à disque selon une ou plusieurs des revendications précédentes 1 à 10, dans lequel les leviers (6;8) de la pince de frein (7) sont d'une configuration en double joue, caractérisé en ce que la tige de commande (32) s'étend, au moins pour l'essentiel, entre les deux joues (4;5) d'un levier de pince (6).

12. Frein à disque selon la revendication 11, caractérisé en ce que la tige de commande (32) s'étend, dans ses parties d'extrémité, au moins approximativement dans un plan qui est perpendiculaire au plan (E) de la pince et qui contient l'axe longitudinal (C) d'un levier (6) de la pince, et comporte, dans sa partie médiane, un décrochement latéral.
